Europäisches Patentamt

**European Patent Office**

Office européen des brevets

(11) Veröffentlichungsnummer : **0 065 511**
**B1**

(12) **EUROPÄISCHE PATENTSCHRIFT**

(45) Veröffentlichungstag der Patentschrift :
09.10.85

(21) Anmeldenummer : 82890074.6

(22) Anmeldetag : 12.05.82

(51) Int. Cl.⁴ : **G 01 L 23/10, G 01 L 1/16,**
**G 01 L 9/08, G 01 P 15/08**

(54) **Messwertaufnehmer mit piezoelektrischem Sensorelement.**

(30) Priorität : 20.05.81 AT 2267/81

(43) Veröffentlichungstag der Anmeldung :
24.11.82 Patentblatt 82/47

(45) Bekanntmachung des Hinweises auf die Patenterteilung : 09.10.85 Patentblatt 85/41

(84) Benannte Vertragsstaaten :
**CH DE FR GB IT LI NL SE**

(56) Entgegenhaltungen :
CH-A- 432 046
CH-A- 454 490
CH-A- 476 299
DE-A- 1 591 255
DE-A- 2 156 959
DE-A- 2 746 712
FR-A- 839 526
US-A- 3 185 869
ISA TRANSACTIONS, Band 11, Nr. 1, 1972, Seiten 45-
51, Pittsburgh (USA); R.E. MCKECHNIE: "A method of
damping the piezoelectric accelerometer".
C. Rohrbach: Handbuch für elektrisches Messen
mechanisches Grössen, Düsseldorf, 1967, S. 149-152
und 539
Die Akte enthält technische Angaben, die nach dem
Eingang der Anmeldung eingereicht wurden und die
nicht in dieser Patentschrift enthalten sind.

(73) Patentinhaber : **List, Hans**
**Heinrichstrasse 126**
**A-8010 Graz (AT)**

(72) Erfinder : **Ruckenbauer, Friedrich**
**Lessingstrasse 5**
**A-8010 Graz (AT)**
Erfinder : **Claassen, Peter**
**Ragnitzstrasse 173**
**A-8047 Graz (AT)**
Erfinder : **Krempl, Peter**
**Leonhardstrasse 100/2/7**
**A-8010 Graz (AT)**

(74) Vertreter : **Krause, Walter, Dr. Dipl.-Ing.**
**Margaretenstrasse 21**
**A-1040 Wien (AT)**

## Beschreibung

Die Erfindung betrifft einen Meßwertaufnehmer mit zumindest einem piezoelektrischen Sensorelement für dynamische Messungen, welches mit Ableitelektroden und einer Signalleitung für die der zu messenden Zustandsgröße entsprechenden Meßsignale in Verbindung steht.

Aus der AT-A-276 810 ist ein Meßwertaufnehmer der genannten Art bekannt, der beispielsweise zur Überwachung des Verbrennungsvorganges im Brennraum einer Brennkraftmaschine einsetzbar ist. Zu diesem Zwecke wird der Meßwertaufnehmer abdichtend in eine Indizierbohrung der Brennraumwand eingesetzt und ein geeigneter Meßverstärker an den Signalausgang des Meßwertaufnehmers angeschlossen, der die bei Druckschwankungen im Brennrauminneren über den piezoelektrischen Effekt von piezoelektrischen Sensorelementen erzeugten Meßsignale auswertet. Der Nachteil dieser bekannten Einrichtung besteht darin, daß aufgrund der Verwendung der piezoelektrischen Sensorelemente, welche wegen der immer vorhandenen Widerstände und Leckströme sehr starke Nullpunktverschiebungen aufweisen können, Messungen praktisch nur von dynamischen Druckänderungen od. dgl. — also von Änderungen von zu messenden Zustandsgrößen mit einer bestimmten Frequenz — sinnvoll durchführbar sind und daß damit keine absoluten oder statischen Messungen ausgeführt werden können.

Weiters wurde ein Meßwertaufnehmer durch die CH-A-476 299 bekannt, bei dem ebenfalls ein aus Scheiben eines piezoelektrischen Materials bestehender Meßkristallsatz über eine Ableitelektrode mit einem Steckanschluß verbunden ist. Auch dieser bekannte Meßwertaufnehmer ist aber nur für die Messung dynamischer Druckänderungen einsetzbar.

Andererseits sind auch Meßwertaufnehmer bekannt, welche aufgrund der Art oder Anordnung ihrer Sensorelemente bzw. der Art der Auswertung der Meßsignale zu statischen bzw. quasistatischen Messungen geeignet sind. So ist beispielsweise aus der AT-A-353 506 ein Meßwertaufnehmer bekannt, mit welchem über die Änderung des Schwingverhaltens eines im Meßwertaufnehmer angeordneten piezoelektrischen Resonators verschiedene physikalische Größen, wie z. B. Temperatur oder Druck gemessen werden können. Derartige Meßwertaufnehmer haben eine sehr hohe Auflösung, besitzen aber wegen der dafür notwendigen hohen Zählraten nur eine sehr geringe Dynamik. Weiters ist beispielsweise aus der AT-A-306 402 ein Druckaufnehmer bekannt, der mit auf einer dehnbaren Hülse aufgeklebten Dehnmeßstreifen als Sensorelement arbeitet. Die Nachteile derartiger Geber liegen in der Temperaturempfindlichkeit der Verklebung der Dehnmeßstreifen sowie in der relativ geringen Auflösung des Dehnmeßstreifen selbst.

Um die Temperaturempfindlichkeit der Verklebung der Dehnmeßstreifen mit der sie tragenden Hülse zu vermindern bzw. um derartige Meßwertaufnehmer auch bei höheren Temperaturen einsetzen zu können wurde durch die DE-A-21 56 959 bereits vorgeschlagen, die den Dehnungsmeßstreifen tragende Hülse in einem von einer Kühlflüssigkeit durchströmten Gehäuse anzuordnen, wobei auch das Innere der Hülse von der Kühlflüssigkeit durchströmt wird. Die Kraftübertragung erfolgt dabei über einen mit einer Membrane verbundenen Stempel, der sich über Flansche an einem Ende der Hülse abstützt. Damit wird zwar eine intensive Kühlung des Dehnmeßstreifens erreicht, doch an dem Umstand, daß dieser Meßwertaufnehmer nur für die Messung statischer oder quasistatischer Zustände einsetzbar ist, ändert sich dadurch nichts.

Weiters wurden durch das « Handbuch für das Messen mechanischer Größen », C. Rohrbach, Düsseldorf 1967, kapazitive Meßwertaufnehmer vorgeschlagen, deren Wandler als Plattenkondensator ausgebildet ist und bei denen der zu messende Druck eine Änderung des Abstandes der Platten des Kondensators bewirkt. Bei diesen ergibt sich das Problem einer nichtlinearen Charakteristik. Außerdem ist es notwendig, die unvermeidlichen Kapazitäten der Anschlußkabel durch relativ aufwendige Schaltungsmaßnahmen zu eliminieren.

Aufgabe der vorliegenden Erfindung ist es, die Nachteile der bekannten Meßwertaufnehmer zu vermeiden und insbesonders einen Meßwertaufnehmer anzugeben, der die hohe Auflösung und Dynamik von nach dem direkten piezoelektrischen Effekt arbeitenden Sensorelement besitzt und auch für statische bzw. quasistatische Messungen verwendbar ist.

Dies wird gemäß der vorliegenden Erfindung dadurch erreicht, daß zumindest ein weiteres, ebenfalls von einem piezoelektrischen Element gebildetes Meßelement für statische bzw. quasistatische Messungen im Meßwertaufnehmer vorgesehen ist, welches in gleicher Weise von der zu messenden Zustandsgröße beeinflußt ist und eine unabhängige Signalleitung besitzt, wobei dieses weitere piezoelektrische Meßelement durch eine über seine Signalleitung anlegbare Wechselspannung unter Ausnutzung des inversen Piezoeffektes zu mechanischen Schwingungen anregbar ist, wobei dei Änderung des Schwingverhaltens des aus dem angeregten Piezoelement und seiner Umgebung gebildeten Schwingsystems als Meßwert für eine statische bzw. quasistatische Messung dient.

Auf diese Weise sind die Vorteile der nach dem direkten piezoelektrischen Effekt messenden Sensorelemente mit jenen eines für statische Messungen adaptierten piezoelektrischen Meßwertaufnehmers kombiniert, wobei durch die gleiche Beeinflussung von der zu messenden Größe unmittelbar vergleichbare Meßwerte sowohl für statische bzw. quasistatische als auch für dynamische Messungen erhalten werden.

Da das weitere Meßelement als piezoelektrischer Resonator ausgebildet ist, ergibt sich der Vorteil, daß eine sehr hohe Auflösung für absolute oder statische bzw. quasistatische Messungen erreichbar ist.

Die damit de facto erhaltene Kombination eines den direkten Piezoeffekt ausnützenden Meßwertaufnehmers mit einem piezoelektrischen Resonator ist auch für den Fachmann nicht naheliegend, da zufolge der beiden ganz unterschiedlichen Meßprinzipien an sich nicht erwartet werden konnte, daß eine derartige Kombination einfach durchführbar ist und auch Vorteile bringt. So müssen beispielsweise übliche, den direkten Piezoeffekt ausnutzende Geber so ausgeführt werden, daß Resonanzen im Schwingverhalten der Piezoelemente möglichst unterdrückt oder zumindest aus dem interessierenden Frequenzbereich verschoben werden. Demgegenüber sind Piezoresonatoren auf möglichst hohe Schwinggüte bei einer Resonanzfrequenz auszulegen.

In diesem Zusammenhang ist es besonders vorteilhaft, wenn gemäß einer Weiterbildung der Erfindung die piezoelektrischen Sensorelemente im wesentlichen die gleiche Empfindlichkeit für die zu messende Zustandsgröße aufweisen. Durch diese Maßnahme sind die beiden Sensorelemente durch einfache Umschaltung ihrer Signalleitungen funktionell austauschbar, was den Meßbetrieb erleichtert.

In einer weiteren Ausbildung der Erfindung sind die piezoelektrischen Sensorelemente mechanisch in Reihe geschaltet wodurch beispielsweise bei gleicher Membranfläche eine höhere Empfindlichkeit erzielbar ist. Das Sensorelement zur dynamischen Messung kann dabei gemäß einer weiteren Ausbildung der vorliegenden Erfindung unter Ausnützung des piezoelektrischen Transversaleffektes kontaktiert und zusammen mit dem weiteren Meßelement zur statischen bzw. quasistatischen Messung, welches unter Ausnützung des piezoelektrischen Longitudinaleffektes kontaktiert ist, in einer gemeinsamen Vorspannhülse angeordnet sein.

Nach einer anderen Ausbildung der Erfindung ist vorgesehen, daß die piezoelektrischen Sensorelemente mechanisch parallelgeschaltet sind, wobei es insbesonders vorteilhaft ist, wenn als Sensorelement zumindest ein im wesentlichen scheibenförmiger piezoelektrischer Kristall vorgesehen ist, der an einer Seite von zwei voneinander isolierten Ableitelektroden und an der gegenüberliegenden Seite von einer gemeinsamen Ableitelektrode kontaktiert ist. Der Vorteil dieser Ausbildung liegt in der dadurch ermöglichten symmetrischen Ausgestaltung des Meßwertaufnehmers.

Schließlich ist es in weiterer Ausgestaltung der Erfindung auch möglich, daß sowohl das Sensorelement zur dynamischen als auch das zur statischen Messung unter Ausnützung des piezoelektrischen Transversaleffektes kontaktiert ist, was ebenfalls auf einfache Weise einen symmetrischen Aufbau und gleiche Empfindlichkeit ermöglicht.

Die Änderung der Parallelkapazität zumindest eines der piezoelektrischen Sensorelemente kann unmittelbar zur statischen bzw. quasistatischen Messung dienen. In diesem Falle wird also unmittelbar die Kapazitätsänderung bei Änderung des Abstandes der gegenüberliegenden Kontaktelektroden zur Messung verwendet, was einen sehr einfachen Aufbau des Meßwertaufnehmers ergibt.

Dabei kann eine in ihrer Frequenz durchstimmbare Anregungswechselspannung an zumindest ein piezoelektrisches Sensorelement angelegt werden und das über zumindest eines der anderen Meßelemente auf diese Weise erhaltene Meßsignal zur Ermittlung der Frequenzcharakteristik des Meßwertaufnehmers verwendet werden. Damit erübrigt sich eine zusätzliche mechanische Meßvorrichtung zur Geberuntersuchung, sodaß die im allgemeinen im für die Messung erforderlichen Auswertegerät schon vorhandene Meßelektronik verwendet werden kann.

Die Erfindung wird im folgenden anhand der in der Zeichnung dargestellten Ausführungsbeispiele näher erläutert.

Figur 1    zeigt einen erfindungsgemäßen Meßwertaufnehmer im Längsschnitt,

Figur 2    einen Schnitt entlang der Linie II-II in Fig. 1,

Figur 3    einen Schnitt durch ein anderes Ausführungsbeispiel der Erfindung,

Figur 4    einen Schnitt entlang der Linie IV-IV in Fig. 3,

Figur 5    das Meßelement des in den Fig. 3 und 4 dargestellten Meßwertaufnehmers in vergrößertem Maßstab,

Figur 6    einen teilweisen Längsschnitt durch ein weiteres Ausführungsbeispiel,

Figur 7    einen teilweisen Längsschnitt durch einen anderen Meßwertaufnehmer gemäß der Erfindung,

Figur 8    einen Schnitt entlang der Linie VIII-VIII in Fig. 6 und

Figur 9    einen Schnitt entlang der Linie IX-IX in Fig. 6.

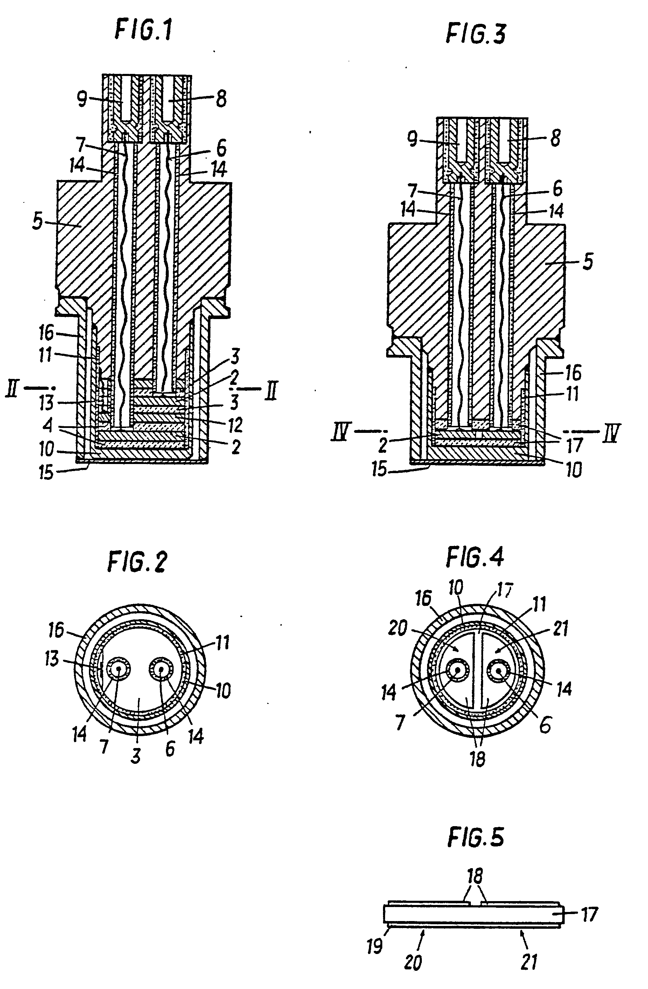

Der Meßwertaufnehmer nach den Fig. 1 und 2 weist zwei piezoelektrische Sensorelemente 3, 4 auf, welche jeweils aus zwei im wesentlichen scheibenförmigen Plättchen aus piezoelektrischem Material bestehen und hindereinander angeordnet sind. Die Sensorelemente 3, 4 bzw. deren einzelne Plättchen sind unter Ausnützung des piezoelektrischen Longitudinaleffektes von entsprechenden Ableitelektroden kontaktiert, wobei die eine Elektrode leitend mit dem Gehäuse 5 des Meßwertaufnehmers 1 und die jeweils andere Elektrode über Metallplättchen 2 und Signalleitungen 6 bzw. 7 mit gegenüber dem Gehäuse isolierten Steckkontakten 8, 9 verbunden ist. Da die Sensorelemente 3, 4 samt Ableitelektroden mittels einer metallischen Vorspannhülse 10 gegenüber dem Gehäuse 5 des Meßwertaufnehmers vorgespannt sind, ist zur Vermeidung eines Kurzschlusses der Ableitelektroden im Bereich der Sensorelemente eine Isolierhülse 11 in die Vorspannhülse 10 eingesetzt. Der dadurch unterbrochene Massenkontakt der beiden inneren piezoelektrischen Plättchen der Sensorelemente 3, 4 ist durch eine Zwischenplatte 12, welche durch eine Verbindungsbrücke 13 an die Gehäusemasse kontaktiert ist, wieder hergestellt. Die Signalleitungen 6, 7 sind zur Vermeidung von Kurzschlüssen ebenfalls in Isolierhülsen 14 geführt.

Der Boden der Vorspannhülse 10 steht in direktem Kontakt mit einer Membran 15, welche auf einem Membranhalter 16 befestigt ist und zur Abdichtung des Innenraumes des Meßwertaufnehmers gegen den nicht weiter dargestellten Meßraum dient.

Die Messung beispielsweise von dynamischen Druckänderungen, welche dynamische Änderungen der auf die Membran wirkenden Kräfte ergeben, erfolgt unter Ausnützung des direkten Piezoeffektes ; die von einem der beiden Sensorelemente abgegebenen Signale werden dazu in bekannter Weise einem nicht dargestellten, über den entsprechenden Steckkontakt angeschlossenen Verstärker zugeführt. Für statische bzw. quasistatische Messungen wird das andere der beiden Sensorelemente, welche aufgrund ihrer Ausbildung annähernd die gleiche Empfindlichkeit besitzen, durch Anlegung einer Wechselspannung über die Signalleitung 6 bzw. 7 zu hochfrequenten mechanischen Schwingungen, z. B. der Dickenschwingung eines Plättchens oder des gesamten Sensorelementes, verwendet. Die Änderung des Schwingverhaltens beispielsweise bei Änderung des Außendruckes vor der Membrane 15 und damit der auf die Vorspannhülse ausgeübten Kraft kann sodann über eine hier nicht dargestellte, am zugehörigen Steckkontakt angeschlossene Auswerteeinheit, welche auch mit der für die dynamische Messung kombiniert sein kann, in einen der zu messenden Zustandsgröße entsprechenden Meßwert umgewandelt werden. Des weiteren kann auch die Frequenzcharakteristik des gesamten Meßwertaufnehmers durch Anregung eines der Sensorelemente über den inversen Piezoeffekt mit Hilfe einer durchstimmbaren Wechselspannung und die Abnahme des Ladungssignals am zweiten Sensorelement ermittelt werden.

Der Meßwertaufnehmer gemäß den Fig. 3 bis 5 weist nur ein piezoelektrisches Element 17 auf, welches aus zwei piezoelektrischen Plättchen mit den zugehörigen Ableitelektroden besteht. Wie insbesonders der vergrößerten Darstellung des unteren der im wesentlichen scheibenförmigen piezoelektrischen Kristalle gemäß Fig. 5 entnommen werden kann, ist jedes der piezoelektrischen Plättchen des Elementes 17 an einer Seite von zwei voneinander isolierten Ableitelektroden 18 und an der gegenüberliegenden Seite von einer gemeinsamen Ableitelektrode 19 kontaktiert. Im übrigen ist der in den Fig. 3 bis 5 dargestellte Meßwertaufnehmer im wesentlichen gleich aufgebaut wie der bereits zu den Fig. 1 und 2 ausführlich besprochene ; gleiche Teile sind mit gleichen Bezugszeichen versehen.

Durch die an einer Seite der piezoelektrischen Kristalle zweigeteilten Ableitelektroden 18 sowie die aus den Fig. 3 und 4 ersichtliche getrennte Signalleitung für die durch diese Maßnahme voneinander funktionell unabhängigen Hälften des Elementes 17 sind praktisch zwei eigene Sensorelemente 20, 21 geschaffen, die mechanisch parallelgeschaltet sind. Der Vorteil dieser Ausführung des Meßwertaufnehmers liegt im symmetrischen Aufbau sowie in der dadurch völligen Gleichwertigkeit der beiden Meßelemente, von denen, wie bereits zu den Fig. 1 und 2 beschrieben, eines zur Messung von dynamischen Änderungen der zu messenden Zustandsgrößen über den direkten Piezoeffekt und das andere zu statischen bzw. quasistatischen Messungen über die Änderung des Resonanzverhaltens benützt werden kann.

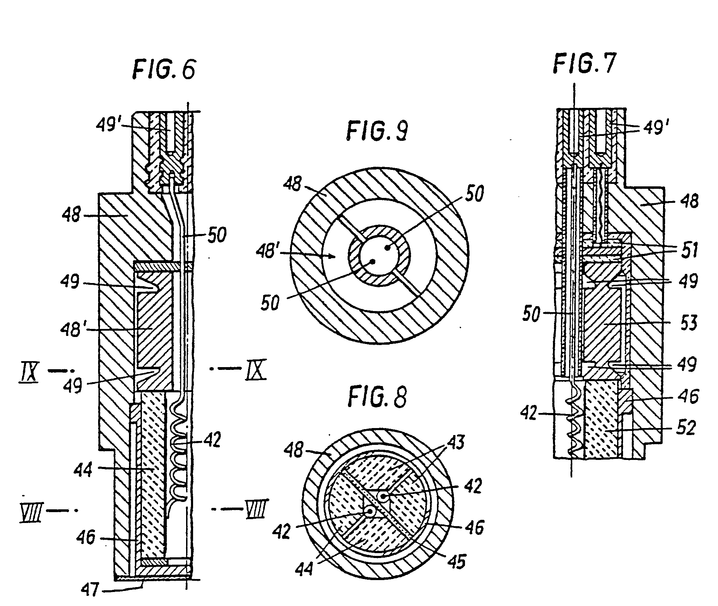

Der Meßwertaufnehmer nach den Fig. 6, 8 und 9 weist vier piezoelektrische Elemente auf, welche unter Ausnützung des piezoelektrischen Transversaleffekts kontaktiert und mechanisch parallel geschaltet sind. Es werden je zwei Elemente gemeinsam über eine als Schraubenfeder ausgeführte mittige Ableitelektrode 42 kontaktiert. Der jeweils andere Pol der piezoelektrischen Sensorelemente ist wiederum über die Gehäusemasse geführt. Die Sensorelementpaare 43, 44 sind durch eine Isolationsschicht 45, die zusätzlich eine hier nicht dargestellte geerdete Metallfolie beinhalten kann, elektrisch isoliert. Die piezoelektrischen Sensorelemente sind in einer Vorspannhülse 46 eingebaut, welche über eine Membran 47 von der zu messenden Zustandsgröße beeinflußbar ist. Zusätzlich ist im Gehäuse 48 des Meßwertaufnehmers noch ein über die Sensorelemente ebenfalls von der Vorspannhülse 46 beaufschlagter Druckübertragungskörper 48' eingebaut, der an seinem Umfang zwei eingedrehte Rillen 49 besitzt. Diese Rillen bewirken eine Entdämpfung der Längsdehnungsschwingungen und der Radialdehnungsschwingungen des Druckübertragungskörpers, wodurch die Güte der Eigenschwingungsmoden verbessert und eine höhere Genauigkeit der Messung erreicht wird. Zur besseren Entkopplung der Schwingungen ist der Druckübertragungskörper 48' — wie aus Fig. 9 ersichtlich — diametral geschlitzt ausgeführt.

An der Oberseite des Gehäuses 48 sind wiederum Steckkontakte 49' angebracht, die über die Signalleitungen 50 mit den Ableitelektroden 42 in Verbindung stehen.

Durch die Parallelschaltung in mechanischer Hinsicht der Sensorelementpaare ist wiederum in sehr vorteilhafter Weise eine zumindest annähernd gleiche Empfindlichkeit für die dynamische sowie für die statische bzw. quasistatische Messung erreicht, wobei die Messung bei wahlweiser Vermendung der Sensorelementpaare, wiederum auf die bereits im Zusammenhang mit den Fig. 1 und 2 beschriebene Weise erfolgt.

Der Meßwertaufnehmer nach Fig. 7 unterscheidet sich von jenem nach den Fig. 6 und 8, 9 im wesentlichen lediglich dadurch, daß das zur statischen Messung verwendete Meßelement 51 von piezoelektrischen Plättchen gebildet ist, welche unter Ausnützung des piezoelektrischen Longitudinaleffektes kontaktiert und von den transversal arbeitenden Sensorelementen 52, welche zur dynamischen Messung dienen, durch einen Druckübertragungskörper 53 getrennt sind. Der Druckübertragungskörper 53 weist wiederum zur Verbesserung der Güte der Eigenschwingungsmoden eingedrehte Rillen 49 auf.

Mit den beschriebenen Meßwertaufnehmern ist also auf sehr einflache Weise ermöglicht, daß unter voller Beibehaltung der Vorteile von piezoelektrischen Meßwertaufnehmern hinsichtlich dynamischer Messungen gleichzeitig auch statische bzw. quasistatische Messungen mit hoher Genauigkeit durchführbar sind.

**Patentansprüche**

1. Meßwertaufnehmer (1) mit zumindest einem piezoelektrischen Sensorelement (3, 4 ; 17, 20, 21 ; 43, 44 ; 51, 52) für dynamische Messungen, welches mit Ableitelektroden (18, 19, 42) und einer Signalleitung (6, 7, 50) für die der zu messenden Zustandsgröße entsprechenden Meßsignale in Verbindung steht, dadurch gekennzeichnet, daß zumindest ein weiteres ebenfalls von einem piezoelektrischen Element gebildetes Meßelement (3, 4 ; 20, 21 ; 43, 44 ; 51, 52) für statische bzw. quasistatische Messungen im Meßwertaufnehmer (1) vorgesehen ist, welches in gleicher Weise von der zu messenden Zustandsgröße beeinflußt ist und eine unabhängige Signalleitung (6, 7, 50) besitzt, wobei dieses weitere piezoelektrische Meßelement (3, 4 ; 20, 21 ; 43, 44 ; 51, 52) durch eine über seine Signalleitung (6, 7, 50) anlegbare Wechselspannung unter Ausnutzung des inversen Piezoeffektes zu mechanischen Schwingungen anregbar ist, wobei dei Änderung des Schwingverhaltens des aus dem angeregten Piezoelement und seiner Umgebung gebildeten Schwingsystems als Meßwert für eine statische bzw. quasistatische Messung dient.

2. Meßwertaufnehmer nach Anspruch 1, dadurch gekennzeichnet, daß die piezoelektrischen Sensorelemente (3, 4 ; 20, 21 ; 43, 44) im wesentlichen die gleiche Empfindlichkeit für die zu messende Zustandsgröße aufweisen.

3. Meßwertaufnehmer nach Anspruch 1 oder 2, dadurch gekennzeichnet, daß die piezoelektrischen Sensorelemente (3, 4 ; 51, 52) mechanisch in Reihe geschaltet sind.

4. Meßwertaufnehmer nach Anspruch 3, dadurch gekennzeichnet, daß das Sensorelement (52) zur dynamischen Messung unter Ausnützung des piezoelektrischen Transversaleffektes kontaktiert und zusammen mit dem weiteren Meßelement (51) zur statischen bzw. quasistatischen Messung, welches unter Ausnützung des piezoelektrischen Longitudinaleffektes kontaktiert ist, in einer gemeinsamen Vorspannhülse (46) angeordnet ist.

5. Meßwertaufnehmer nach Anspruch 1 oder 2, dadurch gekennzeichnet, daß die piezoelektrischen Sensorelemente (20, 21 ; 43, 44) mechanisch parallel geschaltet sind.

6. Meßwertaufnehmer nach Anspruch 5, dadurch gekennzeichnet, daß als Sensorelement zumindest ein im wesentlichen scheibenförmiger piezoelektrischer Kristall (17) vorgesehen ist, der an einer Seite von zwei voneinander isolierten Ableitelektroden (18) und an der gegenüberliegenden Seite von einer gemeinsamen Ableitelektrode (19) kontaktiert ist.

7. Meßwertaufnehmer nach Anspruch 6, dadurch gekennzeichnet, daß sowohl das Sensorelement zur dynamischen als auch das zur statischen Messung unter Ausnützung des piezoelektrischen Transversaleffektes kontaktiert ist.

**Claims**

1. A transducer (1) with one or more piezoelectric sensor elements (3, 4 ; 17, 20, 21 ; 43, 44 ; 51, 52) for dynamic measurements, which elements are connected via contact electrodes (18, 19, 42), to a signal lead (6, 7, 50) carrying the measurement signals corresponding to the state variable to be measured, wherein there is provided at least one further measuring element (3, 4 ; 20, 21 ; 43, 44 ; 51, 52) for static or quasi-static measurements which is also configured as a piezoelectric element and is equally influenced by the state variable to be measured, having an independent signal lead (6, 7, 50), and which additional piezoelectric measuring element (3, 4 ; 20, 21 ; 43, 44 ; 51, 52) may be stimulated to vibrate mechanically by applying an a/c voltage via its signal lead (6, 7, 50), utilizing the inverse piezo effect, the change in the vibration characteristics of the vibration system formed by the excited piezo element and its environment serving as a measurement value for a static or quasi-static measurement.

2. A transducer according to claim 1, wherein said piezoelectric sensor elements (3, 4 ; 20, 21 ; 43, 44) essentially have the same sensitivity for the variable to be measured.

3. A transducer according to claim 1 or 2, wherein said piezoelectric sensor elements (3, 4 ; 51, 52) are mechanically connected in series.

4. A transducer according to claim 3, wherein the sensor element (52) for dynamic measurements is contacted such that the piezoelectric transverse effect is utilized, and is placed into a pre-stressing sleeve (46) together with the other measuring element (51) for static or quasi-static measurements which has been contacted so as to utilize the piezoelectric longitudinal effect.

5. A transducer according to claim 1 or 2, wherein said piezoelectric sensor elements (20, 21 ; 43, 44) are mechanically parallel-connected.

6. A transducer according to claim 5, wherein the sensor element comprises one or more, essentially disk-shaped, piezoelectric crystals (17), carrying two contact electrodes (18) insulated from each other on the one side, and one common contact electrode (19) on the other.

7. A transducer according to claim 6, wherein both the sensor element for dynamic measuring and that for static measuring are contacted so as to utilize the piezoelectric transverse effect.

## Revendications

1. Instrument de mesure (1) avec au moins un élément détecteur piézo-électrique (3, 4 ; 17, 20, 21 ; 43, 44 ; 51, 52) pour mesures dynamiques en liaison avec des électrodes de dérivation (18, 19, 42) et un conducteur de signaux (6, 7, 50) pour des signaux de mesure correspondant à la valeur d'état mesurée, instrument caractérisé en ce qu'il est prévu, dans cet instrument de mesure (1), au moins un autre élément de mesure (3, 4 ; 20, 21 ; 43, 44 ; 51, 52) constitué également par un élément piézo-électrique pour des mesures statiques ou bien quasi statiques, et qui est influencé de la même façon par la grandeur d'état mesurée et qui comporte un conducteur de signaux indépendants (6, 7, 50), cet autre élément de mesure piézo-électrique (3, 4 ; 20, 21 ; 43, 44 ; 51, 52) étant susceptible d'être activé par une tension alternative susceptible d'être appliquée par l'intermédiaire de son conducteur de signaux (6, 7, 50), avec utilisation de l'effet piézo-inverse pour obtenir des oscillations mécaniques, la modification du comportement oscillatoire du système oscillant constitué par l'élément piézo activé et son environnement étant utilisée comme valeur de mesure pour une mesure statique ou bien quasi statique.

2. Instrument de mesure selon la revendication 1, caractérisé en ce que les éléments piézo-électriques de détection (3, 4 ; 20, 21 ; 43, 44) ont essentiellement la même sensibilité pour la grandeur d'état à mesurer.

3. Instrument de mesure selon revendication 1 ou 2, caractérisé en ce que les éléments piézo-électriques de détection (3, 4 ; 51, 52) sont branchés mécaniquement en série.

4. Instrument de mesure selon la revendication 3, caractérisé en ce que l'élément détecteur (52) pour la mesure dynamique est mis en contact en utilisant l'effet transversal piézo-électrique, et est disposé dans une douille de précontrainte commune (46) avec l'autre élément de mesure (51) destiné à la mesure statique ou quasi statique et qui est mis en contact en utilisant l'effet longitudinal piézo-électrique.

5. Instrument de mesure selon revendication 1 ou 2, caractérisé en ce que les éléments détecteurs piézo-électriques (20, 21 ; 43, 44) sont branchés mécaniquement en parallèle.

6. Instrument de mesure selon revendication 5, caractérisé en ce qu'il est prévu comme élément détecteur, au moins un cristal piézo-électrique (17) essentiellement en forme de plaque, qui est mis en contact sur un côté avec deux électrodes de dérivation (18) isolées l'une par rapport à l'autre et sur le côté opposé avec une électrode de dérivation commune (19).

7. Instrument de mesure selon revendication 6, caractérisé en ce que l'élément détecteur pour la mesure dynamique aussi bien que l'élément détecteur pour la mesure statique est mis en contact en utilisant l'effet transversal piézo-électrique.

6

0 065 511

FIG.1

FIG.3

FIG.2

FIG.4

FIG.5

*FIG.6*

*FIG.9*

*FIG.7*

*FIG.8*